# EUROPÄISCHE PATENTSCHRIFT

(11) **EP 1 590 106 B1**
(45) Veröffentlichungstag und Bekanntmachung des Hinweises auf die Patenterteilung: **13.12.2006**
(21) Anmeldenummer: 04706619.6
(22) Anmeldetag: 30.01.2004
(51) Int. Cl.: B21B 39/32

(54) **INSPEKTIONSSYSTEM FÜR WALZPRODUKTE EINER WALZANLAGE**
INSPECTION SYSTEM FOR ROLLED PRODUCTS OF A MILLING STATION
SYSTEME D'INSPECTION DE PRODUITS DE LAMINAGE D'UN LAMINOIR

(30) Priorität: 05.02.2003 DE 10304581
(43) Veröffentlichungstag der Anmeldung: 02.11.2005
(73) Patentinhaber: SMS Demag Aktiengesellschaft, 40237 Düsseldorf (DE); ThyssenKrupp Stahl AG, 47166 Duisburg (DE)
(72) Erfinder: TIEPELMANN, Bernd, 57271 Hilchenbach (DE); OEMKES, Horst, 46047 Oberhausen (DE)
(74) Vertreter: Klüppel, Walter
(86) Internationale Anmeldenummer: PCT/EP2004/000834
(87) Internationale Veröffentlichungsnummer: WO 2004/069442

(56) Entgegenhaltungen:
- DE-A- 2 165 936
- US-A- 3 780 882

## Beschreibung

Die Erfindung bezieht sich auf ein Inspektionssystem für Walzprodukte einer Walzanlage, bestehend aus zwei lnspektionstischen (siehe z.B. DE 21 65 936 A).

Um die Walzprodukte einer Überprüfung auf mögliche beim Walzbetrieb entstandene Fehler zu unterziehen, werden im Anschluss an den Walzprozess Inspektionstische eingesetzt, von denen aus eine Prüfperson die Oberseite der Walzprodukte inspizieren kann. Für eine Prüfung der Unterseite kann das Walzprodukt im Anschluss an einen ersten Inspektionstisch über eine Wendevorrichtung, beispielweise eine sogenannte Wenderolle, geführt werden und somit auf einen unterhalb des ersten Inspektionstischs liegenden unteren Inspektionstisch gefördert werden, um die Unterseite des Walzprodukts frei zu legen. Diese Überprüfung auf dem unteren Tisch kann eine gebückte oder knieende Körperhaltung der Prüfperson erforderlich machen und somit auf Dauer möglicherweise Gesundheitsschäden zur Folge haben. Bei der Einrichtung eines Arbeitsplatzes spielt daher zur Erhaltung der Arbeitskraft zunehmend die Berücksichtigung von ergonomischen Gesichtspunkten eine Rolle.

Aus DE 21 65 936 A ist eine Vorrichtung zum Wenden von Brammen, Platinen, Bleche, Blechpakete und dgl. um 180° bekannt. Das Wenden des Materials ist erforderlich, um die Oberflächen zu kontrollieren und bei Fehlern durch Flämmen oder Schleifen zu bearbeiten. Das zu kontrollierende Gut bzw. Material wird auf einer Unterlage oder einem Rollgang in der Wendevorrichtung abgelegt oder eingefahren. Die Schwenkfinger greifen bzw. der Schwenkarm greift zwischen die Roststäbe der Unterlage oder zwischen die Rollen des Rollganges. Der Schwenkvorgang zum Wenden des Guts bzw. Materials wird dadurch eingeleitet, dass der Kolben der hydraulischen Kolben-Zylinder-Einheit ausgefahren wird. Dadurch wir der Schwenkarm um die Achse gedreht und hebt das zu wendende Gut von der Unterlage ab, bis es zwischen den Schwenkarmen eingeklemmt ist.
Die bekannte Vorrichtung sieht also vor, dass die Schwenkarme und die Unterlage eine Einheit bilden bzw. ineinandergreifen.

Der Erfindung liegt daher die Aufgabe zugrunde, ein Inspektionssystem für Walzprodukte einer Walzanlage der oben genannten Art anzugeben, das eine beidseitige Überprüfung der Walzprodukte durch eine Prüfperson auf einer ergonomisch günstigen Höhe erlaubt.

Diese Aufgabe wird durch die Merkmals Kombination von Anspruch 1 gelöst.

Die Erfindung geht dabei von der Überlegung aus, dass es für die Ergonomie, das heißt hier für die Leistungsmöglichkeit und die optimalen Arbeitsbedingungen der Prüfperson, nachteilig ist, die Inspektion der Walzprodukte auf zwei Ebenen durchzuführen. Das Inspektionssystem sollte daher dafür ausgelegt sein, die Überprüfung sowohl der Oberseite als auch nach einer 180° Drehung des Walzprodukts die Inspektion seiner Unterseite auf einer Arbeitsebene zu ermöglichen, also bei beiden Zuständen die Arbeitsebene beizubehalten. Dies ist durch eine entsprechend ausgestaltete Wendevorrichtung erreichbar. Dafür ist die Wendevorrichtung für die ergonomisch günstige Inspektion der Ober- und Unterseite des Walzproduktes auf ein und derselben Ebene mit zwei Aufnahmeelementen für Walzprodukte ausgestattet, die um eine im wesentlichen parallel zur Erstreckungsebene der Walzprodukte ausgerichtete Drehachse schwenkbar sind.

Um dem üblicherweise nur begrenzt zur Verfügung stehenden Raumbedarf eines Inspektionssystems Rechnung zu tragen, ist der Schwenkbereich des Aufnahmeelements zweckmäßigerweise möglichst klein zu halten. Dies ist dadurch erreichbar, dass die Drehachse des Aufnahmeelements vorteilhafterweise in Förderrichtung der Walzprodukte orientiert ist.

Zur Beibehaltung der für die Prüfperson ergonomisch günstigen Arbeitsebene auch nach einer 180° Drehung der Walzprodukte sind die Aufnahmeelemente vorzugsweise spiegelsymmetrisch parallel zur Drehachse angeordnet.

Für eine Beförderung der Walzprodukte, beispielsweise in Richtung der Inspektionstische, sind Förderbänder zweckmäßig. Um zudem einen ebenen Weitertransport der Walzprodukte beispielsweise in Richtung der nachgeordneten Inspektionstische auch unmittelbar nach einer 180° Drehung zu ermöglichen, umfasst jedes Aufnahmeelement vorzugsweise zumindest ein Paar in zwei Ebenen liegende Förderbänder zur gemeinsamen Führung eines dazwischen liegenden Walzprodukts, wofür die ein Paar bildenden Förderbänder vorteilhafterweise eine gegenläufige Drehrichtung und eine übereinstimmende Förderrichtung des Walzprodukte aufweisen. Somit kann das betreffende Walzprodukt jeweils in Höhe des unteren in der jeweiligen Inspektionsebene liegenden Förderbandes direkt auf einen in derselben Ebene liegenden nachfolgenden Inspektionstisch weiter transportiert werden.

Um ein mögliches Verrutschen der Walzprodukte zwischen den Förderbändern des jeweiligen Aufnahmeelements, insbesondere beim Drehvorgang, zu vermeiden, sind die Förderbänder vorzugsweise mit einer Anzahl von Fixierungselementen für die Walzprodukte versehen.

Für eine einfache Handhabung, die beispielsweise eine Fernbedienbarkeit ermöglicht, sind die Fixierungselemente für die Walzprodukte besonders vorteilhaft als Magnete, vorzugsweise als Elektromagnete, ausgestaltet.

Zur organisatorischen und logistischen Entkoppelung der Betriebsabläufe ist der Wendevorrichtung ein Walzprodukt-Zwischenspeicher vorgeordnet. In diesem können die Walzprodukte nach ihrer Herstellung bis zu ihrer Oberflächenüberprüfung geparkt werden. In besonders vorteilhafter Ausgestaltung stellt der Walzprodukt-Zwischenspeicher ein nach Bedarf zeitweise ruhendes Transportband für die Walzprodukte dar.

Ein Ausführungsbeispiel der Erfindung wird anhand einer Zeichnung näher erläutert.

Darin zeigen:
- Figur 1: eine schematische Draufsicht auf ein Inspektionssystem für Walzprodukte einer Walzanlage, und
- Figur 2: eine schematische Seitenansicht einer Wendevorrichtung quer zur Förderrichtung der Walzprodukte.

Gleiche Teile sind in allen Figuren mit denselben Bezugszeichen versehen.

Ein Inspektionssystem 1 umfasst einen hier nicht dargestellten Eingangsbereich, in dem direkt aus der laufenden Produktion des Walzbetriebs heraus die zu prüfenden Walzprodukte 2, wie beispielsweise Blechtafeln, zum Beispiel mit Hilfe einer nicht dargestellten rotierenden Trommelschere aus einem auf Enddicke gewalzten Walzproduktband herausgeschnitten werden und mittels Fördereinrichtungen, insbesondere eines Transportbandes 4, zu einem nachgeordneten Inspektionstisch 6 transportiert werden.

Das Transportband 4 ist dabei im Ausführungsbeispiel auch als Walzprodukt-Zwischenspeicher 8 ausgelegt. Das heißt, das Transportband 4 kann bedarfsweise angehalten werden und als Parkstation für die Walzprodukte 2 fungieren, um beispielsweise ein zu schnelles Nachfördern von zu inspizierenden Walzprodukten 2 zu verhindern, und um somit einen störungsfreien Betrieb zwischen der Walzproduktion und der Inspektion der Walzprodukte 2 zu gewährleisten. Der Walzprodukt-Zwischenspeicher 8 dient somit als Puffer.

Bei Freigabe des Weitertransports eines Walzprodukts 2 wird es auf einen nachgeordneten Inspektionstisch 6 gefördert. Dort wird die Oberfläche des auf dem Inspektionstisch 6 liegenden Walzprodukts 2 auf Fehler, die möglicherweise beim Walzprozess entstanden sind, von einer Prüfperson untersucht. Diese geschieht noch vergleichsweise zeitnah zur Produktion. Das hat zur Folge, dass bei dieser sogenannten In-Line-Inspektion Oberflächenfehler der Walzprodukte 2 noch innerhalb einer Walzanlage erkannt werden können.

Um nicht nur die Oberseite, sondern auch die Unterseite des Walzprodukts 2 inspizieren zu können, muss dass betreffende Walzprodukt 2 üblicherweise um 180° gewendet werden. Zu diesem Zweck kommt häufig eine nicht dargestellte sogenannte Wenderolle zum Einsatz. Dabei kann das Walzprodukt 2 über diese Rolle von einem ersten Inspektionstisch zu einem unterhalb des ersten Inspektionstischs liegenden unteren Inspektionstisch gefördert werden, um durch diese 180° Drehung des betreffenden Walzprodukts 2 seine Unterseite frei zu legen. Die unterhalb der Prüfungsebene der Oberseite liegende Ebene erschwert konsequenterweise für die Prüfperson die Inspektion dieser Oberfläche des Walzprodukts 2, da sie zu einer gebückten und somit unbequemen Körperhaltung führt, wenn das Walzprodukt beispielsweise auf dem Boden liegt oder da die Prüfperson gegebenenfalls zum Erreichen der unteren Ebene beispielsweise eine Treppe herabsteigen muss. Daher ist insbesondere aus ergonomischen Gründen eine Vorrichtung wünschenswert, die ein Walzprodukt 2 derart wendet, dass die damit frei gelegte Unterseite ohne weitere Zwischenschritte direkt auf derselben ergonomisch günstig gewählten Höhe für die Prüfperson wie die zuvor geprüfte Oberseite liegt.

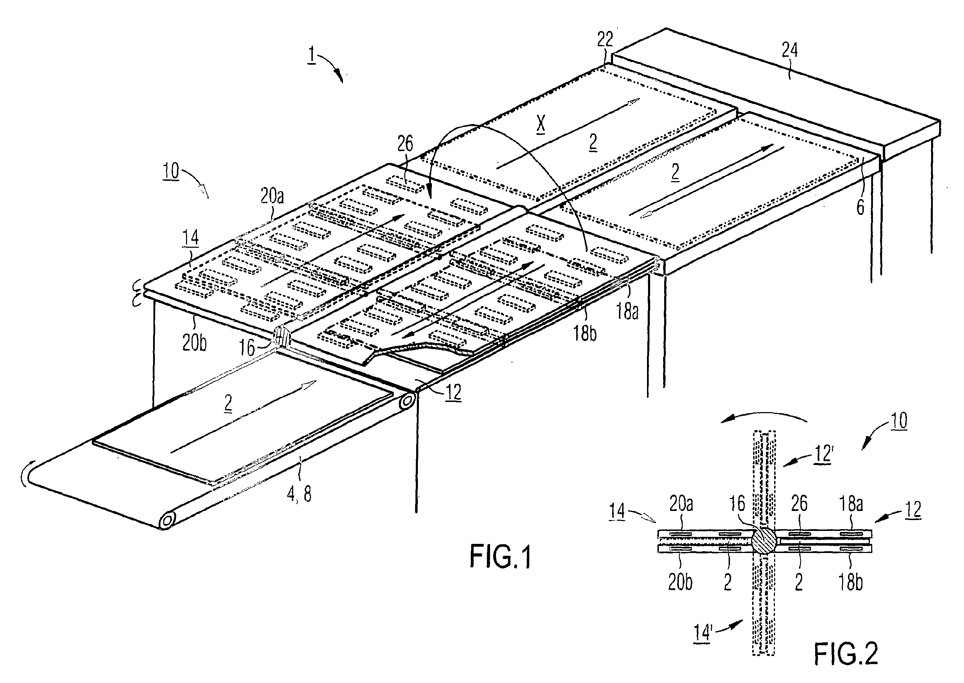

Zur Vermeidung dieses Höhenunterschieds des Walzprodukts 2 vor und nach der 180° Drehung und der damit möglicherweise verbundenen nachteiligen Auswirkungen auf die Prüfperson ist im Inspektionssystem 1 eine Wendevorrichtung 10 vorgesehen, bei der zwei Aufnahmeelemente 12, 14 für Walzprodukte 2 um eine im wesentlichen parallel zur Erstreckungs- oder Arbeitsebene X der Walzprodukte 2 ausgerichtete Drehachse 16 schwenkbar sind, wie vor allem in Figur 2 gezeigt.

Das Inspektionssystem 1 ist mittels des Aufnahmeelements 12 der Wendevorrichtung 10 dafür ausgelegt, die Überprüfung sowohl der Oberseite als auch nach einer 180° Drehung des Walzprodukts 2 die Inspektion seiner Unterseite auf ein und derselben ergonomisch günstigen Arbeitsebene zu ermöglichen.

Die Drehachse 16 der Aufnahmeelemente 12, 14 im Ausführungsbeispiel ist in weiterer Ausgestaltung in Förderrichtung der Walzprodukte 2, wie durch den Pfeil in Figur 1 und 2 gezeigt, orientiert. Diese Ausgestaltung ist im Vergleich zu einer möglichen Orientierung einer Drehachse senkrecht zur Förderrichtung besonders platzsparend.

Des Weiteren sind die Aufnahmeelemente 12, 14 spiegelsymmetrisch parallel zur Drehachse 16 angeordnet. Die Wendevorrichtung 10 sieht somit optisch einer zweiflügeligen Windmühle ähnlich, wie in Figur 2 ersichtlich. Durch die spiegelsymmetrische Anordnung der Aufnahmeelemente 12, 14 zur Drehachse 16 liegt die zu inspizierende Oberfläche der Walzprodukte 2 auch nach einer 180° Drehung wieder in der selben für die Prüfperson ergonomisch günstigen Arbeitsebene X wie vor der Drehung.

Im Ausführungsbeispiel ist dem Aufnahmeelement 12 für Walzprodukte 2 dabei ein Paar in zwei Ebenen liegender Förderbänder 18a,b zugeordnet, während dem Aufnahmeelement 14 ein Paar in zwei Ebenen liegender Förderbänder 20a,b zugewiesen ist. Jedes Paar Förderbänder 18a,b und 20a,b kann durch eine gegenläufige Drehrichtung von Förderband 18a und Förderband 18b sowie von Förderband 20a und Förderband 20b ein innerhalb eines Paares liegendes Walzprodukt 2 in Richtung oder in Gegenrichtung zu den Inspektionstischen 6 und 22 transportieren.

So kann beispielsweise ein über das Transportband 4 in Richtung des Inspektionstisches 6 geführtes Walzprodukt 2 durch die Förderbänder 18a,b zum Inspektionstisch 6 transportiert werden, wo die Oberseite des Walzprodukts einer Überprüfung auf Produktionsfehler durch eine Prüfperson in ergonomisch günstiger Arbeitsebene X unterzogen werden kann. Anschließend kann das oberseitig inspizierte Walzprodukt 2 beispielsweise durch Weiterförderung ohne Richtungsänderung im Ausführungsbeispiel der Verschrottung in einer Verschrottungseinrichtung 24 zugeführt werden oder nach Änderung der Drehrichtung der Förderbänder 18a,b zurück zur Wendevorrichtung 10 transportiert werden. Dort kann bei geeigneter Platzierung des Walzprodukts 2 zwischen den Förderbändern 18a,b der nicht dargestellte Förderbänderantrieb angehalten werden und die 180° Drehung um die Drehachse 16, wie in den Figuren 1 und 2 durch die Pfeile angedeutet, vorgenommen werden. Damit liegt das vor der 180° Drehung oberhalb des Walzprodukts 2 angeordnete Förderband 18a nun unterhalb des Walzprodukts 2. Das Walzprodukt 2 kann nun mit der nach oben gerichteten Unterseite, ohne dass ein Höhenunterschied zu überwinden ist, auf gleicher Ebene durch Anstellen des Förderbandantriebs auf den Inspektionstisch 22 gefördert werden und dort einer Inspektion auf Fehler in der Oberfläche unterzogen werden.

In weiterer Ausgestaltung sind die Förderbänder 18a,b und 20a,b des Ausführungsbeispiels mit einer Anzahl von Fixierungselementen 26 für die Walzprodukte 2 versehen, um ein mögliches Verrutschen der Walzprodukte 2 zwischen den Förderbändern 18a,b bzw. 20a,b des jeweiligen Aufnahmelements 12 bzw. 14 insbesondere beim Drehvorgang, wie in Figur 2 durch die gestrichelte Darstellung der Aufnahmeelemente 12', 14' in vertikaler Stellung angedeutet, zu vermeiden. Die Fixierungselemente 26 stellen im Ausführungsbeispiel rechtekkig geformte Magnete dar, vorzugsweise Elektromagnete, um auch über eine Fernbedienung steuerbar zu sein.

Nach abgeschlossener Prüfung der Oberflächen wird das inspizierte Walzprodukt 2 im Ausführungsbeispiel in Förderrichtung zu der Verschrottungseinrichtung 24. Andere Weiterverarbeitungsmöglichkeiten sind selbstverständlich ebenfalls denkbar.

### Bezugszeichenliste

- 1.: Inspektionssystem
- 2.: Walzprodukt
- 4.: Transportband
- 6.: Inspektionstisch
- 8.: Walzprodukt-Zwischenspeicher
- 10.: Wendevorrichtung
- 12, 12': Aufnahmeelement
- 14, 14': Aufnahmeelement
- 16: Drehachse
- 18a: Förderband
- 18b: Förderband
- 20a: Förderband
- 20b: Förderband
- 22: Inspektionstisch
- 24: Verschrottungseinrichtung
- 26: Fixierungselemente

- X: Erstreckungs- oder Arbeitsebene

## Patentansprüche

1. Inspektionssystem (1) für Walzprodukte (2) einer Walzanlage, bestehend aus zwei Inspektionstischen (6, 22),
**dadurch gekennzeichnet,**
**dass** die zwei Inspektionstische (6, 22) nebeneinander, auf ein und derselben Ebene, angeordnet sind,
**dass** den zwei Inspektionstischen (6, 22), In Förderrichtung der Walzprodukte (2) gesehen, eine Wendevorrichtung (10) vorgeordnet ist, bei der zwei Aufnahmeelemente (12, 14) für Walzprodukte (2) um eine im wesentlichen parallel zur Erstreckungsebene X der Walzprodukte (2) ausgerichtete Drehachse (16) schwenkbar sind,
**dass** die Drehachse (16) der Aufnahmeelemente (12, 14) in Förderrichtung der Walzprodukte (2) orientiert ist,
**dass** die Aufnahmeelemente (12,14) spiegelsymmetrisch parallel zur Drehachse (16) angeordnet sind,
**dass** jedem Inspektionstisch (6, 22) ein Aufnahmeelement (12, 14) vorgeordnet ist, und
**dass** ein Walzprodukt (2) zu dem jeweiligen Inspektionstisch (6, 22) beförderbar ist.

2. Inspektionssystem(1) nach Anspruch 1, bei dem jedes Aufnahmeelement (12; 14) zumindest ein Paar in zwei Ebenen liegende Förderbänder (18a,b; 20a,b) umfasst, die eine gegenläufige Drehrichtung und eine übereinstimmende Förderrichtung der Walzprodukte (2) aufweisen.

3. Inspektionssystem (1) nach Anspruch 2, bei dem die Förderbänder (18a,b, 20a,b) mit einer Anzahl von Fixierungselementen (26) für Walzprodukte (2) versehen sind.

4. Inspektionssystem (1) nach Anspruch 3, bei dem die Fixierungselemente (26) für Walzprodukte (2) als Magnete ausgestaltet sind.

5. Inspektionssystem (1) nach einem der Ansprüche 1 bis 4, bei dem der Wendevorrichtung (10) ein Walzprodukt-Zwischenspeicher (8) vorgeordnet ist.

6. Inspektionssystem (1) nach Anspruch 5, bei dem der Walzprodukt-Zwischenspeicher (8) als ein Transportband (4) ausgestaltet ist.

## Claims

1. Inspection system (1) for rolled products (2) of a rolling installation, consisting of two inspection tables (6, 22), **characterised in that** the two inspection tables (6, 22) are arranged adjacent to one another on one and the same plane, that arranged in front of the two inspection tables (6, 22) as seen in conveying direction of the rolled products (2) is a turning device (10) in which two receiving elements (12, 14) for rolled products (2) are pivotable about a rotational axis (16) aligned substantially parallel to the extension plane X of the rolled products (2), that the rotational axis (16) of the receiving elements (12, 14) is oriented in conveying direction of the rolled products (2), that the receiving elements (12, 14) are arranged with mirror symmetry parallel to the rotational axis (16), that a receiving element (12, 14) is arranged upstream of each inspection table (6, 22) and that a rolled product (2) can be conveyed to the respective inspection table (6, 22).

2. Inspection system (1) according to claim 1, in which each receiving element (12; 14) comprises at least one pair of conveyor belts (18a, b; 20a, b), which lie in two planes and which have a mutually opposite rotational direction and a corresponding conveying direction of the rolled products (2).

3. Inspection system (1) according to claim 2, in which the conveyor belts (18a, b; 20a, b) are provided with a number of fixing elements (26) for rolled products (2).

4. Inspection system (1) according to claim 3, in which the fixing elements (26) for rolled products (2) are formed as magnets.

5. Inspection system (1) according to one of claims 1 to 4, in which a rolled product intermediate store (8) is arranged in front of the tuming device (10).

6. Inspection system (1) according to claim 5, in which the rolled product intermediate store (8) is constructed as a transport belt (4).

## Revendications

1. Système d'inspection (1) pour des produits laminés (2) d'une installation de laminage, comprenant deux tables d'inspection (6, 22),
**caractérisé en ce que**
-- les deux tables d'inspection (6, 22) sont agencées l'une à côté de l'autre sur un seul et même plan,
-- les deux tables d'inspection (6, 22), vues dans la direction de convoyage des produits laminés (2), sont précédées d'un dispositif de renversement (10) dans lequel deux éléments récepteurs (12, 14) pour des produits laminés (2) sont capables de pivoter autour d'un axe de rotation (16) orienté essentiellement parallèlement au plan d'extension (X) des produits laminés (2),
-- l'axe de rotation (16) des éléments récepteurs (12, 14) est orienté dans la direction de convoyage des produits laminés (2),
-- les éléments récepteurs (12, 14) sont agencés de manière symétrique parallèlement à l'axe de rotation (16),
-- un élément récepteur (12, 14) est agencé avant chaque table d'inspection (6, 22), et
-- un produit laminé (2) est susceptible d'être amené à la table d'inspection respective (6, 22).

2. Système d'inspection (1) selon la revendication 1, dans lequel chaque élément récepteur (12 ; 14) comprend au moins une paire de bandes de convoyage (18a, 18b ; 20a, 20b) disposées dans deux plans, qui présentent une direction de rotation opposée et une direction de convoyage identique pour les produits laminés (2).

3. Système d'inspection (1) selon la revendication 2, dans lequel les bandes de convoyage (18a, 18b ; 20a, 20b) sont pourvues d'un certain nombre d'éléments de fixation (26) pour les produits laminés (2).

4. Système d'inspection (1) selon la revendication 3, dans lequel les éléments de fixation (26) pour les produits laminés (2) sont réalisés sous forme d'aimants.

5. Système d'inspection (1) selon l'une des revendications 1 à 4, dans lequel le dispositif de renversement (10) est précédé par un accumulateur intermédiaire (8) pour produits laminés.

6. Système d'inspection (1) selon la revendication 5, dans lequel l'accumulateur intermédiaire (8) pour produits laminés est réalisé sous forme de bande de transport (4).
